# EUROPEAN PATENT APPLICATION

(11) **EP 4 629 171 A1**
(43) Date of publication of application: **08.10.2025**
(21) Application number: 22966878.5
(22) Date of filing: 30.11.2022
(51) Int. Cl.: G06T 7/10

(54) **LABELING METHOD AND LABELING APPARATUS**

(71) Applicant: Shenzhen Yinwang Intelligent Technologies Co., Ltd., Shenzhen, Guangdong 518129 (CN)
(72) Inventor: MAO, Xin, Shenzhen, Guangdong 518129 (CN)
(74) Representative: Körber, Martin Hans
(86) International application number: PCT/CN2022/135722
(87) International publication number: WO 2024/113287

(57) **Abstract**

This application provides an annotation method and an annotation apparatus. According to the annotation method provided in this application, when annotating a first pixel set in an unannotated first image, the annotation apparatus first obtains a first feature value of the first pixel set in the first image and a second feature value of a second pixel set in a second image through a first neural network. The first neural network is used to obtain a feature value of a pixel in an image. Then, the annotation apparatus determines an annotation of the first pixel set based on an annotation of the second pixel set and a similarity between the first feature value and the second feature value, to improve accuracy of automatic annotation.

## Description

### TECHNICAL FIELD

This application relates to the field of artificial intelligence technologies, and in particular, to an annotation method and an annotation apparatus.

### BACKGROUND

Semantic segmentation means classification on each pixel in an image. Semantic segmentation may be implemented through a deep learning neural network. A deep learning neural network used for video semantic segmentation may be referred to as a video semantic segmentation neural network. The video semantic segmentation neural network may be obtained through training based on training data. The training data includes a video and an annotation of a pixel in each frame of image in the video. The annotation of the pixel indicates a classification result of the pixel.

Currently, a method for obtaining an annotation of a pixel in an image in a video is as follows: (1) A video is obtained, and an annotator annotates pixels in some images in the video. (2) A matching relationship between pixels in any two temporally consecutive images is established based on a grayscale similarity. (3) An annotation result of a pixel in a form image in the two images is propagated to a corresponding pixel in a latter image based on the matching relationship.

However, accuracy of the annotation result obtained by using the foregoing method is low.

### SUMMARY

This application provides an annotation method and apparatus, to improve annotation accuracy.

According to a first aspect, this application provides an annotation method, including: obtaining a first feature value of a first pixel set in a first image through a first neural network, where the first neural network is used to obtain a feature value of a pixel in an image, and the first pixel set includes at least one pixel; obtaining a second feature value of a second pixel set in a second image through the first neural network, where the second pixel set includes at least one pixel; and determining an annotation of the first pixel set based on an annotation of the second pixel set and a similarity between the first feature value and the second feature value.

The first image may be considered as an unannotated image or be referred to as a to-be-annotated image, and the second image may be considered as an annotated image.

In this embodiment, when annotating the first pixel set in the to-be-annotated first image based on the annotated second image, the annotation apparatus determines the annotation of the first pixel set based on the annotation of the second pixel set and a similarity between a feature value (also referred to as the first feature value) obtained after the first pixel set in the first image is input to the first neural network and a feature value (also referred to as the second feature value) obtained after the second pixel set in the second image is input to the first neural network. In this application, a feature value obtained through a neural network is also referred to as a semantic feature value.

It should be understood that a feature extracted by the neural network may be considered as an abstract semantic feature related to a task such as classification, the feature is less sensitive to interference such as illumination, deformation, occlusion, and fast displacement than a feature such as pixel grayscale or an optical flow. In addition, compared with a feature extracted through self-supervised learning, the semantic feature has less noise. Therefore, in this embodiment, when a matching relationship between a pixel set in the first image and that in the second image is established based on a similarity between semantic feature values, the second pixel set that is determined in the second image and that matches the first pixel set can be more accurate, and accuracy of automatic annotation can be further improved.

With reference to the first aspect, in a possible implementation, the obtaining a first feature value of a first pixel set in a first image through a first neural network includes: obtaining a feature map output by the first neural network at a first feature extraction layer after the first image is input to the first neural network; obtaining a first target semantic feature map based on the feature map output by the first feature extraction layer; and determining the first feature value of the first pixel set based on the first target semantic feature map.

For example, the annotation apparatus may first scale the feature map output by the first feature extraction layer to a first resolution to obtain the first target semantic feature map, and then obtain the first feature value of the first pixel set based on the first target semantic feature map of the first resolution.

For example, the annotation apparatus may directly determine, as the first target semantic feature map without performing scaling, the feature map output by the first feature extraction layer, and then determine, as the first feature value of the first pixel set based on a value relationship between a resolution of the feature map output by the first feature extraction layer and a resolution of the first image, a pixel value of a pixel set that is in the first target semantic feature map and that corresponds to the first pixel set.

In this implementation, because the first feature value corresponding to the first pixel set is determined based only on the first target semantic feature map obtained by a feature extraction layer in the first neural network, the first feature value can be quickly calculated.

With reference to the first aspect, in a possible implementation, the method further includes: obtaining a feature map output by the first neural network at a second feature extraction layer after the first image is input to the first neural network; and the obtaining a first target semantic feature map based on the feature map output by the first feature extraction layer includes: obtaining the first target semantic feature map based on the feature map output by the first feature extraction layer and the feature map output by the second feature extraction layer.

During specific implementation, when the first target semantic feature map is obtained based on the feature map output by the first feature extraction layer and the feature map output by the second feature extraction layer, the feature map output by the first feature extraction layer and the feature map output by the second feature extraction layer may be simultaneously scaled to feature maps of a same resolution and the feature maps are fused. Then, a fused feature map is determined as the first target semantic feature map.

In this implementation, the first target semantic feature map is determined based on the feature map output by the second feature extraction layer in the first neural network other than based on the feature map output by the first feature extraction layer. It should be understood that different types of features are extracted at different feature extraction layers. Therefore, the first feature value obtained is more accurate than the first feature value, obtained based on the feature map output by a separate feature extraction layer, of the first pixel set in the first image.

With reference to the first aspect, in a possible implementation, a resolution of the first target semantic feature map is consistent with that of the first image.

In this implementation, when the resolution of the first target semantic feature map is consistent with that of the first image, the first feature value of the first pixel set in the first image can be quickly obtained in the first target semantic feature map. That is, short time can be spent when the first feature value of the first pixel set is determined.

With reference to the first aspect, in a possible implementation, the method further includes: obtaining, through the first neural network, a second target semantic feature map corresponding to the second image; scaling down the first target semantic feature map to a third target semantic feature map of a second resolution, where the second resolution is less than the first resolution; scaling down the second target semantic feature map to a fourth target semantic feature map of the second resolution; determining, based on the first resolution and the second resolution, a third pixel set that is in the third target semantic feature map and that corresponds to the first pixel set; determining, in the fourth target semantic feature map, a fourth pixel set that has a highest pixel value similarity to the third pixel set; and determining, in the second image based on the first resolution and the second resolution, a group of second pixel sets corresponding to the fourth pixel set; and the determining an annotation of the first pixel set based on an annotation of the second pixel set and a similarity between the first feature value and the second feature value includes: determining, as the annotation of the first pixel set, an annotation of a second pixel set that is in the group of second pixel sets and whose feature value has a highest similarity to the first feature value.

In this implementation, when the second pixel set that matches the first pixel set is determined in the second image, the first target semantic feature map and the second target semantic feature map are first scaled to a smaller resolution. Then, a pixel matching relationship is established for the smaller resolution. Finally, the second pixel set that matches the first pixel set is determined in the second image based on a value relationship between the smaller resolution and the resolution of the first target semantic feature map. It should be understood that compared with directly establishing the pixel matching relationship based on the first target semantic feature map and the second target semantic feature map, calculation efficiency of this manner is higher.

With reference to the first aspect, in a possible implementation, the similarity includes any one of the following measurement manners: a Euclidean distance between feature values, a cosine distance between feature values, and an inner product similarity between feature values.

Optionally, when the similarity is measured by using the Euclidean distance between feature values or the cosine distance between feature values, a second pixel set that best matches the first pixel set is determined based on a nearest neighbor search algorithm. Alternatively, when the similarity is measured by using the inner product similarity between feature values, a second pixel set that best matches the first pixel set is determined by using a highest inner product search method.

According to a second aspect, this application provides a pixel matching method, including: obtaining a first feature value of a first pixel set in a first image through a first neural network, where the first neural network is used to obtain a feature value of a pixel in an image, and the first pixel set includes at least one pixel; obtaining a second feature value of a second pixel set in a second image through the first neural network, where the second pixel set includes at least one pixel; and establishing a matching relationship between a pixel set in the first image and that in the second image based on a similarity between the first feature value and the second feature value.

With reference to the second aspect, in a possible implementation, the obtaining a first feature value of a first pixel set in a first image through a first neural network includes: obtaining a feature map output by the first neural network at a first feature extraction layer after the first image is input to the first neural network; obtaining a first target semantic feature map based on the feature map output by the first feature extraction layer; and determining the first feature value of the first pixel set based on the first target semantic feature map.

With reference to the second aspect, in a possible implementation, the method further includes: obtaining a feature map output by the first neural network at a second feature extraction layer after the first image is input to the first neural network; and the obtaining a first target semantic feature map based on the feature map output by the first feature extraction layer includes: obtaining the first target semantic feature map based on the feature map output by the first feature extraction layer and the feature map output by the second feature extraction layer.

With reference to the second aspect, in a possible implementation, a resolution of the first target semantic feature map is consistent with a first resolution, and the first resolution is a resolution of the first image.

With reference to the second aspect, in a possible implementation, the method further includes:
obtaining, through the first neural network, a second target semantic feature map corresponding to the second image; scaling down the first target semantic feature map to a third target semantic feature map of a second resolution, where the second resolution is less than the first resolution; scaling down the second target semantic feature map to a fourth target semantic feature map of the second resolution;
determining, based on the first resolution and the second resolution, a third pixel set that is in the third target semantic feature map and that corresponds to the first pixel set; determining, in the fourth target semantic feature map, a fourth pixel set that has a highest pixel value similarity to the third pixel set; determining, in the second image based on the first resolution and the second resolution, a group of second pixel sets corresponding to the fourth pixel set; and determining, as a second pixel set that matches the first pixel set, a second pixel set that is in the group of second pixel sets and whose feature value has a highest similarity to the first feature value.

With reference to the second aspect, in a possible implementation, the similarity includes any one of the following measurement manners: a Euclidean distance between feature values, a cosine distance between feature values, and an inner product similarity between feature values.

Optionally, the method further includes: When the similarity is measured by using the Euclidean distance between feature values or the cosine distance between feature values, a best matched second pixel set is determined based on a nearest neighbor search algorithm. Alternatively, when the similarity is measured by using the inner product similarity between feature values, a best matched second pixel set is determined by using a highest inner product search method.

According to a third aspect, this application provides an annotation apparatus, including: an obtaining module, configured to obtain a first feature value corresponding to a first pixel set in a first image through a first neural network, where the first neural network is used to obtain a feature value of a pixel in an image, and the first pixel set includes at least one pixel; and the obtaining module is further configured to obtain a second feature value corresponding to a second pixel set in a second image through the first neural network, where the second pixel set includes at least one pixel; and a processing module, configured to determine an annotation of the first pixel set based on an annotation of the second pixel set and a similarity between the first feature value and the second feature value.

With reference to the third aspect, in a possible implementation, the obtaining module is specifically configured to: obtain a feature map output by the first neural network at a first feature extraction layer after the first image is input to the first neural network; and the processing module is specifically configured to: obtain a first target semantic feature map based on the feature map output by the first feature extraction layer; and determine the first feature value of the first pixel set based on the first target semantic feature map.

With reference to the third aspect, in a possible implementation, the obtaining module is further configured to: obtain a feature map output by the first neural network at a second feature extraction layer after the first image is input to the first neural network; and the processing module is further configured to: obtain the first target semantic feature map based on the feature map output by the first feature extraction layer and the feature map output by the second feature extraction layer.

With reference to the third aspect, in a possible implementation, a resolution of the first target semantic feature map is consistent with a first resolution, and the first resolution is a resolution of the first image.

With reference to the third aspect, in a possible implementation, the obtaining module is further configured to: obtain, through the first neural network, a second target semantic feature map corresponding to the second image; and the processing module is further configured to: scale down the first target semantic feature map to a third target semantic feature map of a second resolution, where the second resolution is less than the first resolution; scale down the second target semantic feature map to a fourth target semantic feature map of the second resolution; determine, based on the first resolution and the second resolution, a third pixel set that is in the third target semantic feature map and that corresponds to the first pixel set; determine, in the fourth target semantic feature map, a fourth pixel set that has a highest pixel value similarity to the third pixel set; determine, in the second image based on the first resolution and the second resolution, a group of second pixel sets corresponding to the fourth pixel set; and determine, as the annotation of the first pixel set, an annotation of a second pixel set that is in the group of second pixel sets and whose feature value has a highest similarity to the first feature value.

With reference to the third aspect, in a possible implementation, the similarity includes any one of the following measurement manners: a Euclidean distance between feature values, a cosine distance between feature values, and an inner product similarity between feature values.

Optionally, when the similarity is measured by using the Euclidean distance between feature values or the cosine distance between feature values, a second pixel set that best matches the first pixel set is determined based on a nearest neighbor search algorithm. Alternatively, when the similarity is measured by using the inner product similarity between feature values, a second pixel set that best matches the first pixel set is determined by using a highest inner product search method.

According to a fourth aspect, this application provides a pixel matching apparatus, including: an obtaining module, configured to obtain a first feature value corresponding to a first pixel set in a first image through a first neural network, where the first neural network is used to obtain a feature value of a pixel in an image, and the first pixel set includes at least one pixel; and the obtaining module is further configured to: obtain a second feature value corresponding to a second pixel set in a second image through the first neural network, where the second pixel set includes at least one pixel; and a processing module, configured to establish a matching relationship between a pixel set in the first image and that in the second image based on a similarity between the first feature value and the second feature value.

With reference to the fourth aspect, in a possible implementation, the obtaining module is specifically configured to: obtain a feature map output by the first neural network at a first feature extraction layer after the first image is input to the first neural network; and the processing module is specifically configured to: obtain a first target semantic feature map based on the feature map output by the first feature extraction layer; and determine the first feature value of the first pixel set based on the first target semantic feature map.

With reference to the fourth aspect, in a possible implementation, the obtaining module is further configured to: obtain a feature map output by the first neural network at a second feature extraction layer after the first image is input to the first neural network; and the processing module is further configured to: obtain the first target semantic feature map based on the feature map output by the first feature extraction layer and the feature map output by the second feature extraction layer.

With reference to the fourth aspect, in a possible implementation, a resolution of the first target semantic feature map is consistent with a first resolution, and the first resolution is a resolution of the first image.

With reference to the fourth aspect, in a possible implementation, the obtaining module is further configured to: obtain, through the first neural network, a second target semantic feature map corresponding to the second image; and the processing module is further configured to: scale down the first target semantic feature map to a third target semantic feature map of a second resolution, where the second resolution is less than the first resolution; scale down the second target semantic feature map to a fourth target semantic feature map of the second resolution; determine, based on the first resolution and the second resolution, a third pixel set that is in the third target semantic feature map and that corresponds to the first pixel set; determine, in the fourth target semantic feature map, a fourth pixel set that has a highest pixel value similarity to the third pixel set; determine, in the second image based on the first resolution and the second resolution, a group of second pixel sets corresponding to the fourth pixel set; and determine, as a second pixel set that matches the first pixel set, a second pixel set that is in the group of second pixel sets and whose feature value has a highest similarity to the first feature value.

With reference to the fourth aspect, in a possible implementation, the similarity includes any one of the following measurement manners: a Euclidean distance between feature values, a cosine distance between feature values, and an inner product similarity between feature values.

According to a fifth aspect, this application provides an annotation apparatus, including a memory and a processor, where the memory is configured to store program instructions; and the processor is configured to invoke the program instructions in the memory to perform the method according to any implementation of the first aspect or any implementation of the second aspect.

According to a sixth aspect, this application provides a vehicle, including the annotation apparatus according to any implementation of the third aspect and/or the pixel matching apparatus according to any implementation of the fourth aspect.

According to a seventh aspect, this application provides a chip, including at least one processor and a communication interface. The communication interface and the at least one processor are interconnected through a line. The at least one processor is configured to run a computer program or instructions, to perform the method described according to any implementation of the first aspect or any implementation of the second aspect.

According to an eighth aspect, this application provides a computer-readable medium. The computer-readable medium stores program code to be executed by a computer, and the program code includes instructions used to perform the method according to any implementation of the first aspect or any implementation of the second aspect.

According to a ninth aspect, this application provides a computer program product. The computer program product includes computer program code. When the computer program code is executed by a computer, the computer is enabled to perform the method according to any implementation of the first aspect or any implementation of the second aspect.

### BRIEF DESCRIPTION OF DRAWINGS

FIG. 1 is a diagram of a structure of an application scenario according to this application;
FIG. 2 is a schematic flowchart of an annotation method according to an embodiment of this application;
FIG. 3 is a diagram of a structure of obtaining a first target semantic feature map through a neural network according to an embodiment of this application;
FIG. 4 is a diagram of a structure of obtaining a first target semantic feature map through a neural network according to another embodiment of this application;
FIG. 5 is a diagram of a structure of obtaining a first target semantic feature map through a neural network according to still another embodiment of this application;
FIG. 6 is a diagram of a process of establishing a matching relationship according to an embodiment of this application;
FIG. 7 is a schematic flowchart of a method for annotating each pixel in each frame of image in a video according to an embodiment of this application;
FIG. 8 is a diagram of a constructed feature pyramid according to an embodiment of this application;
FIG. 9 is a diagram of a process of establishing a matching relationship according to another embodiment of this application;
FIG. 10 is a diagram of matching different pixels in a same frame of image to a same pixel in another frame of image according to an embodiment of this application;
FIG. 11 is a diagram of a structure of an annotation apparatus according to an embodiment of this application; and
FIG. 12 is a diagram of a structure of an annotation apparatus according to another embodiment of this application.

### DESCRIPTION OF EMBODIMENTS

To make the objectives and technical solutions of this application clearer and more intuitive, the following describes in detail the annotation method provided in this application with reference to the accompanying drawings and embodiments. It should be understood that specific embodiments described herein are merely used to explain this application but are not intended to limit this application.

With rapid development of artificial intelligence technologies, a video semantic segmentation technology has become a research hotspot and one of the most important technologies in autonomous driving sensing, and plays a significant role in vehicle decision-making and scenario understanding.

Specifically, the video semantic segmentation means classification on each pixel in each frame of image in a video, and may be implemented through a deep learning neural network. Usually, a deep learning neural network used for video semantic segmentation may be referred to as a video semantic segmentation neural network.

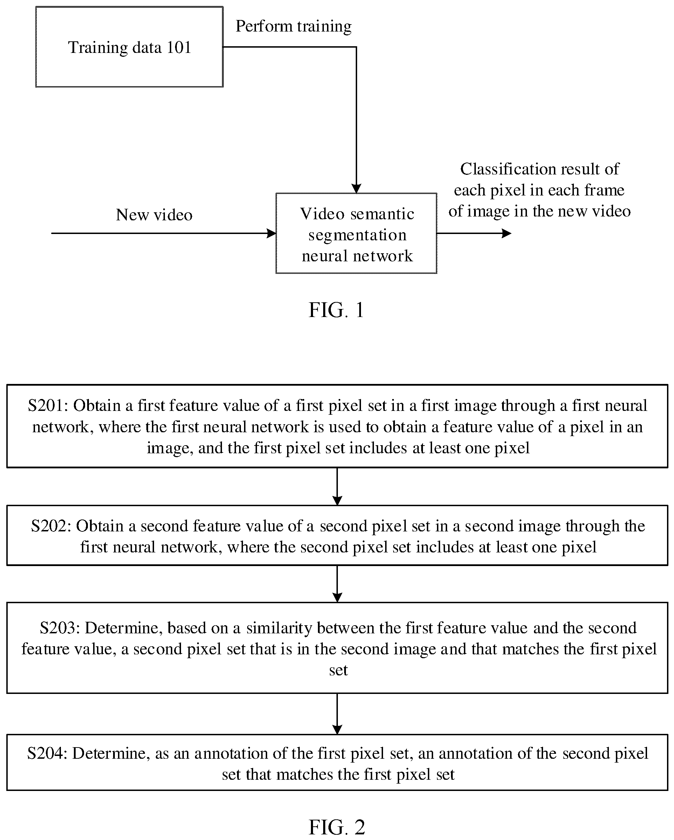

For example, FIG. 1 is a diagram of an application scenario according to this application. As shown in FIG. 1, to obtain a video semantic segmentation neural network, a neural network needs to be trained based on training data 101 that includes a video and an annotation of a pixel (the annotation of the pixel indicates a classification result of the pixel) in each frame of image in the video. Then, for new video data, a classification result of each pixel in each frame of image in the new video data may be obtained through the trained video semantic segmentation neural network.

It can be learned from the application scenario shown in FIG. 1 that before a video semantic segmentation model is obtained through training, a large quantity of videos need to be obtained first, and each pixel in each frame of image in the video needs to be annotated, to obtain training data. However, because an amount of image data used for training is usually excessively large, it is undoubtedly time-consuming to rely only on an annotator to annotate the pixel in each frame of image in the video. Therefore, how to efficiently complete annotation of training data of the semantic segmentation neural network becomes a very critical issue.

Currently, a method for completing an annotation of a pixel in an image in a video is as follows: (1) A video is obtained, and an annotator annotates pixels in some images in the video. (2) A matching relationship between pixels in any two temporally consecutive images is established based on a grayscale similarity. (3) An annotation result of a pixel in a former image in the two images is propagated to a corresponding pixel in a latter image based on the matching relationship.

However, accuracy of the annotation result obtained by using the foregoing method is low. Consequently, segmentation accuracy of the video semantic segmentation neural network obtained through training is low.

In view of this, embodiments of this application provide an annotation method, to improve accuracy of an annotation result.

FIG. 2 is a schematic flowchart of the annotation method according to an embodiment of this application. As shown in FIG. 2, the annotation method in this application includes S201, S202, S203, and S204. The method in this application may be performed by an annotation apparatus.

It should be noted herein that specific deployment of the annotation apparatus is not limited in this embodiment. For example, the annotation apparatus may be deployed on a server, or may be deployed on a vehicle side.

S201: Obtain a first feature value of a first pixel set in a first image through a first neural network, where the first neural network is used to obtain a feature value of a pixel in an image, and the first pixel set includes at least one pixel.

In this embodiment, the first image is an image that includes the first pixel set that needs to be annotated but has not been annotated. An annotation of a pixel indicates a classification result of the pixel. For ease of description, in this application, the first image is also referred to as a to-be-annotated first image.

It should be noted herein that a specific manner of obtaining the first image is not limited in this embodiment of this application. For example, the first image may be a single captured image, or may be a frame of image extracted from a video.

Specifically, a quantity of pixels included in the first pixel set is not limited in this embodiment. For example, the first pixel set may include only one pixel, or the first pixel set may include a plurality of pixels.

In this embodiment, after obtaining the first image, the annotation apparatus inputs the first image to the first neural network. The first neural network in this embodiment is used to obtain a feature value of each pixel in an image, to obtain the first feature value of the first pixel set. In this application, a feature value corresponding to a pixel set obtained based on the first neural network is also referred to as a semantic feature value.

For example, when the first pixel set includes only one pixel (it is assumed that the pixel is referred to as a first pixel), obtaining the first feature value corresponding to the first pixel set in the first image through the first neural network may be understood as obtaining the first feature value corresponding to the first pixel in the first image through the first neural network. That is, in this scenario, a pixel-level feature value is obtained. In addition, it should be understood that in this scenario, after the first image is used as an input of the first neural network, a semantic feature value corresponding to each pixel may be obtained.

For another example, the first pixel set may further include a plurality of pixels (for example, N pixels, where N is a positive integer greater than 1). The plurality of pixels may be obtained based on some algorithms, for example, performing clustering by using information such as optical information and illumination intensity. In this case, when the first feature value corresponding to the first pixel set in the first image is obtained through the first neural network, the first image may be first input to the first neural network, to first obtain a semantic feature value of each of the N pixels, and then obtain, based on the semantic feature value of each of the N pixels, a semantic feature value corresponding to the first pixel set.

Optionally, the first neural network in this embodiment may be a pre-trained deep neural network. It should be noted that a neural network usually includes a plurality of layers. Any other layer other than a first layer (that is, an input layer) used to receive the first image may be considered as a feature extraction layer for performing feature extraction on the first image.

It should be noted herein that a specific structure of the first neural network is not limited in this embodiment. For example, the first neural network may be a fully connected neural network, or the first neural network is a convolutional neural network.

In this embodiment, during specific implementation, an implementation of obtaining the first feature value of the first pixel set in the first image through the first neural network is as follows: obtaining a feature map output by the first neural network at a feature extraction layer (referred to as a first feature extraction layer) after the first image is input to the first neural network; then, obtaining a first target semantic feature map based on the feature map output by the first feature extraction layer; and finally, determining the first feature value of the first pixel set based on the first target semantic feature map.

The first target semantic feature map obtained based on the feature map output by the first feature extraction layer is a feature map for which the first feature value of the first pixel set can be obtained.

It should be understood that a resolution of the feature map output by the first feature extraction layer may be different from that of the first image. However, there is a specific proportional relationship between the resolutions.

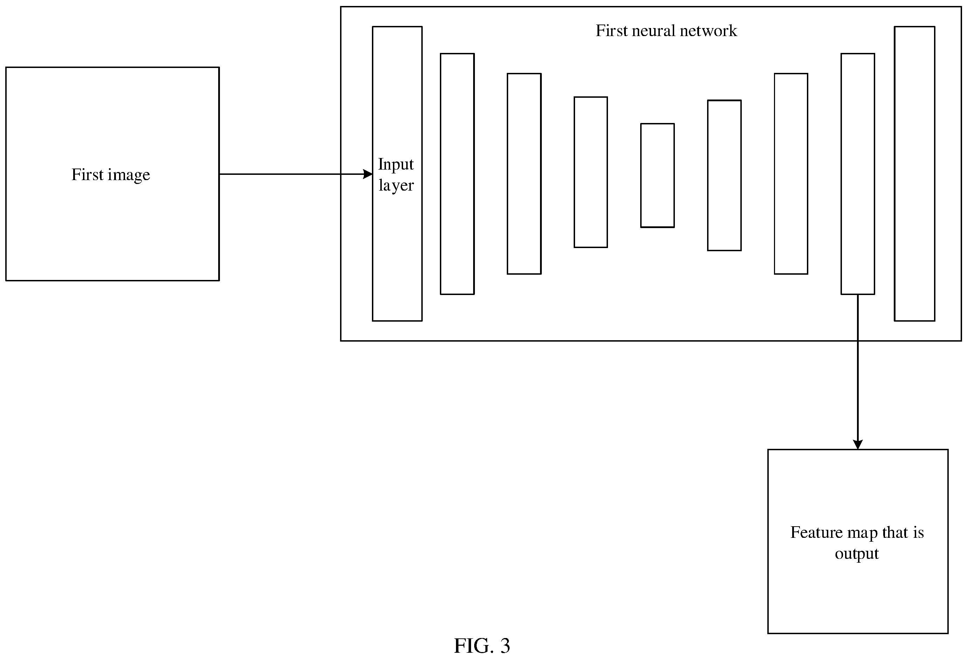

Therefore, in an implementation solution, as shown in FIG. 3, the feature map output by the first feature extraction layer may be directly used as the first target semantic feature map. Then, a pixel value of a pixel set that is in the feature map output by the first feature extraction layer and that corresponds to the first pixel set in the first image is determined as the first feature value of the first pixel set in the first image based on the proportional relationship between resolutions.

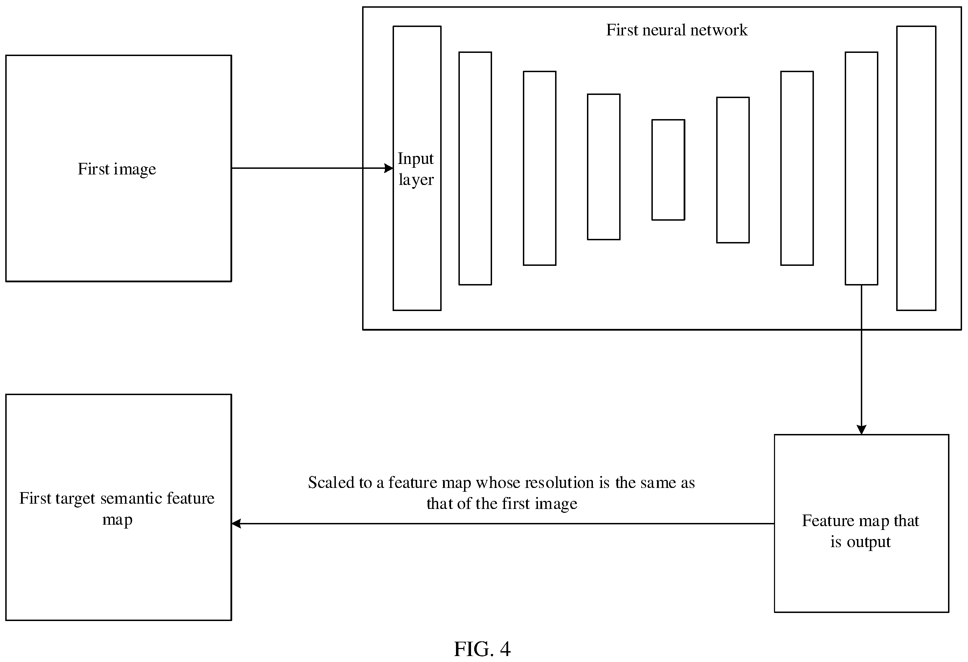

Alternatively, in another implementation solution, as shown in FIG. 4, after the feature map output by the first feature extraction layer is obtained, the feature map output by the feature extraction layer may be scaled to a feature map of a first resolution (the resolution of the first image is referred to as the first resolution) through interpolation, that is, scaled to a feature map whose resolution is the same as that of the first image. Then, the feature map of the first resolution is determined as the first target semantic feature map, and the first feature value (that is, a semantic feature value) corresponding to the first pixel set is determined based on the feature map of the first resolution.

It should be noted herein that in the example shown in FIG. 3, using a feature extraction layer of a penultimate layer as the first feature extraction layer is merely an example, and does not constitute a limitation on this application. In actual application, a user can define which layer the first feature extraction layer is.

Optionally, when the first target semantic feature map is obtained based on the feature map output by the first feature extraction layer, a feature map output by another feature extraction layer (for example, referred to as second feature extraction) may be further obtained. Then, the first target semantic feature is obtained based on the feature map output by the first feature extraction layer and the feature map output by the second feature extraction.

To be specific, in this implementation solution, when the first target semantic feature map is obtained, not only a feature map output by a separate feature extraction layer is used, but feature maps output by a plurality of feature extraction layers (which specific layers are used may be predefined by the user) in the first neural network are used.

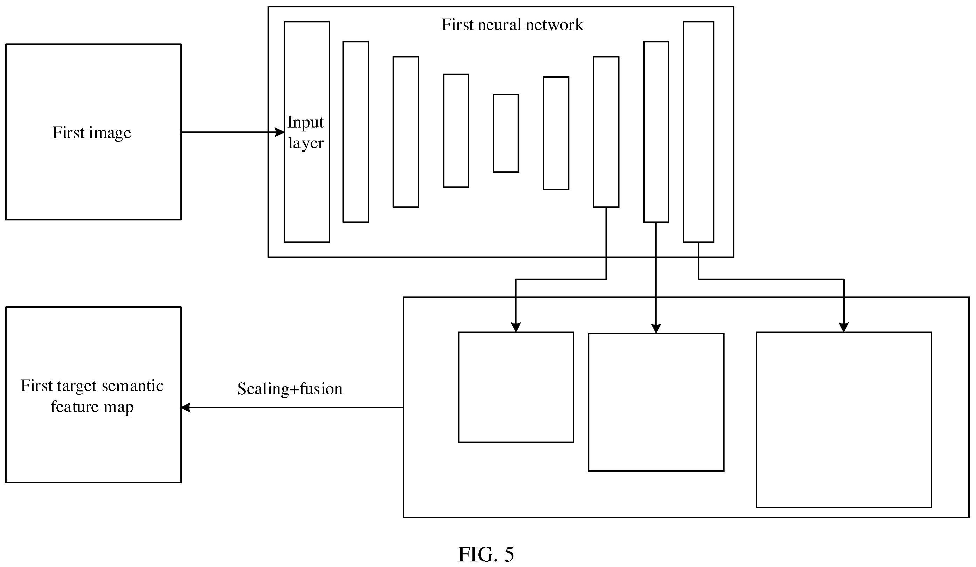

For example, as shown in FIG. 5, after the first image is input to the first neural network, feature maps that are respectively output by last three feature extraction layers in the first neural network may be first obtained. Then, the feature maps output by all the three feature extraction layers are scaled to feature maps of the first resolution, and the feature maps are fused to obtain the first target semantic feature map. It may be understood that the first feature value of the first pixel set may be determined based on the first target semantic feature map.

It may be further understood that feature maps output by different feature extraction layers may reflect different types of features of the first image. Therefore, the first feature value of the first pixel set obtained by using the first target semantic feature map that is obtained based on the feature maps output by the plurality of feature extraction layers in the first neural network, is more accurate than the first feature value of the first pixel set obtained by using the first target semantic feature map that is obtained based on a feature map output by a separate feature extraction layer.

S202: Obtain a second feature value of a second pixel set in a second image through the first neural network, where the second pixel set includes at least one pixel.

In this embodiment, the second image may be considered as an annotated image. For ease of description, in this application, the second image is also referred to as an annotated second image.

In this embodiment, after obtaining the first image, the annotation apparatus inputs the second image to the first neural network, to obtain the second feature value of the second pixel set.

In other words, in this embodiment, the second image is also input to the first neural network, and feature extraction is performed on a pixel value of each pixel in the second image through the first neural network, to obtain the second feature value of the second pixel set.

It should be noted herein that the second pixel set in this embodiment is a set that includes at least one pixel.

Specifically, obtaining the second feature value of the second pixel set in the second image through the first neural network is similar to obtaining the first feature value of the first pixel set in the first image through the first neural network. For specific implementation, refer to the detailed description in step S201 in which the first feature value of the first pixel set in the first image is obtained through the first neural network. Details are not described herein again.

S203: Determine, based on a similarity between the first feature value and the second feature value, a second pixel set that is in the second image and that matches the first pixel set.

Specifically, in this embodiment, after the first feature value of the first pixel set in the first image and the second feature value of the second pixel set in the second image are obtained, that is, after a semantic feature value of the first pixel set in the first image and a semantic feature value of the second pixel set in the second image are obtained, when the annotation apparatus annotates the first pixel set in the first image, the annotation apparatus may first determine, based on the similarity between the first feature value and the second feature value, the second pixel set that matches the first pixel set. Then, an annotation of the matched second pixel set is determined as an annotation of the first pixel set.

For example, when the annotation apparatus determines, in the second image based on the similarity between the first feature value and the second feature value, the second pixel set that matches the first pixel set, an implementation solution is as follows: A second pixel set that is in the second image and whose second feature value has a feature value similarity greater than a preset value to the first feature value is used as the matched second pixel set.

Further, the second pixel set that is in the second image and whose second feature value has a highest feature value similarity to the first feature value may be used as the matched second pixel set.

Specifically, when the second pixel set that is in the second image and whose second feature value has a highest feature value similarity to the first feature value is determined, an implementation is as follows: scaling down the first target semantic feature map to a third target semantic feature map of a second resolution, where the second resolution is less than the first resolution; scaling down the second target semantic feature map to a fourth target semantic feature map of the second resolution; determining, based on the first resolution and the second resolution, a third pixel set that is in the third target semantic feature map and that corresponds to the first pixel set; determining, in the fourth target semantic feature map, a fourth pixel set that has a highest pixel value similarity to the third pixel set; determining, in the second image based on the first resolution and the second resolution, a group of second pixel sets corresponding to the fourth pixel set; and finally, determining, as a second pixel set that matches the first pixel set, a second pixel set that is in the group of second pixel sets and whose feature value has a highest similarity to the first feature value.

Semantic feature maps of the second resolution are semantic feature maps obtained after the resolution of the first target semantic feature map and the resolution of the second target semantic feature map are scaled down.

In this implementation, a matching relationship is first established for the second resolution based on a similarity between feature values. Then, a group of second pixel sets in the second image is obtained based on a value relationship between the second resolution and the first resolution. In addition, a second pixel set that matches the first pixel set is determined from the group of second pixel sets based on a highest feature value similarity.

Optionally, the first target semantic feature map may be further scaled down to another preset resolution, to obtain respective feature pyramids of the first image and the second image. The another preset resolution is less than a resolution of a raw image and is greater than the second resolution (that is, the second resolution is a minimum resolution).

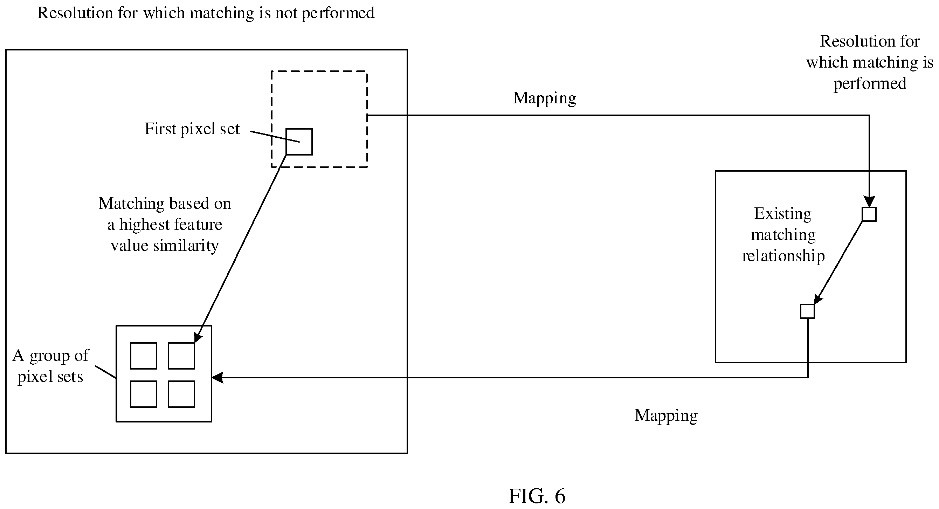

In this case, after the matching relationship is established for the second resolution based on the similarity between feature values, when the group of second pixel sets in the second image is obtained based on the value relationship between the second resolution and the first resolution, the following manner may be used: As shown in FIG. 6, a group of pixel sets corresponding to matched pixels in a semantic feature map that is of a lowest resolution and that corresponds to the second image is obtained, based on a scaling relationship, from an unmatched semantic feature map of the lowest resolution. Then, a pixel set that matches the first pixel set at the lowest resolution for which matching is not performed is found, based on the highest feature value similarity, from the group of pixel sets. In this case, the lowest resolution for which matching is not performed becomes a resolution for which matching is performed. Finally, the foregoing process is repeated until a second pixel set, matching the first pixel, in the second image is determined.

In this implementation, when the second pixel set that matches the first pixel set is determined in the second image, the first target semantic feature map and the second target semantic feature map are first scaled to a smaller resolution. Then, a pixel matching relationship is established for the smaller resolution. Finally, the second pixel set that matches the first pixel set is determined in the second image based on a value relationship between the smaller resolution and the resolution of the raw image. It should be understood that compared with directly establishing the pixel matching relationship based on the first target semantic feature map and the second target semantic feature map, calculation efficiency of this manner is higher.

Specifically, when the second pixel set that is in the second image and whose second feature value has a highest feature value similarity to the first feature value is determined, another implementation is as follows: for the first pixel set in the first image, searching for a group of second pixel sets, matching the first pixel set, in the second image by using a specific search method; and then, determining, as a second pixel set that matches the first pixel set, a second pixel set that is in the group of second pixel sets and that has a highest feature value similarity to the first feature value. Specifically, if the similarity is measured by using a Euclidean distance or a cos similarity, a group of second pixel sets, of the first pixel set in the first image, in the second image are searched for by using a nearest neighbor search manner, and then matching is performed based on a similarity between feature values. If the similarity is measured by using an inner product distance, a search method such as a highest inner product search is used to search for a group of second pixel sets, of the first pixel set in the first image, in the second image, and then matching is performed based on a similarity between feature values.

It should be noted herein that how to define the similarity between the first feature value and the second feature value is not limited in this embodiment. For example, the similarity between the first feature value and the second feature value may be a Euclidean distance between the first feature value and the second feature value, a cosine distance between the first feature value and the second feature value, or an inner product similarity between the first feature value and the second feature value.

S204: Determine, as an annotation of the first pixel set, an annotation of the second pixel set that matches the first pixel set.

In this embodiment, when it is determined that a second pixel set in an annotated second image is a pixel set that matches a first pixel set in a to-be-annotated first image, the annotation apparatus determines an annotation of the first pixel set as an annotation of the matched second pixel set. That is, the annotation of the first pixel set and the annotation of the second pixel set are the same.

In this embodiment, when annotating the first pixel set in the first image based on the annotated second image, the annotation apparatus determines the annotation of the first pixel set based on the annotation of the second pixel set and a similarity between a feature value (also referred to as the first feature value) obtained after the first pixel set in the first image is input to the first neural network and a feature value (also referred to as the second feature value) obtained after the second pixel set in the second image is input to the first neural network. In this application, a feature value obtained through a neural network is also referred to as a semantic feature value. It should be understood that a feature extracted by the neural network may be considered as an abstract semantic feature related to a task such as classification, the feature is less sensitive to interference such as illumination, deformation, occlusion, and fast displacement than a feature such as pixel grayscale or an optical flow. In addition, compared with a feature extracted through self-supervised learning, the semantic feature has less noise. Therefore, in this embodiment, when a matching relationship between a pixel in the first image and that in the second image is established based on a similarity between semantic feature values, the second pixel set that is determined in the second image and that matches the first pixel set can be more accurate, and precision of automatic annotation can be further improved.

The foregoing describes a method for annotating, based on the annotated second image, the first pixel set in the unannotated first image. It should be understood that, in many cases, many images need to be annotated at the same time. For example, each pixel in each frame of image in a video needs to be annotated. With reference to a specific embodiment, the following describes a method for annotating each pixel in each frame of image in a video.

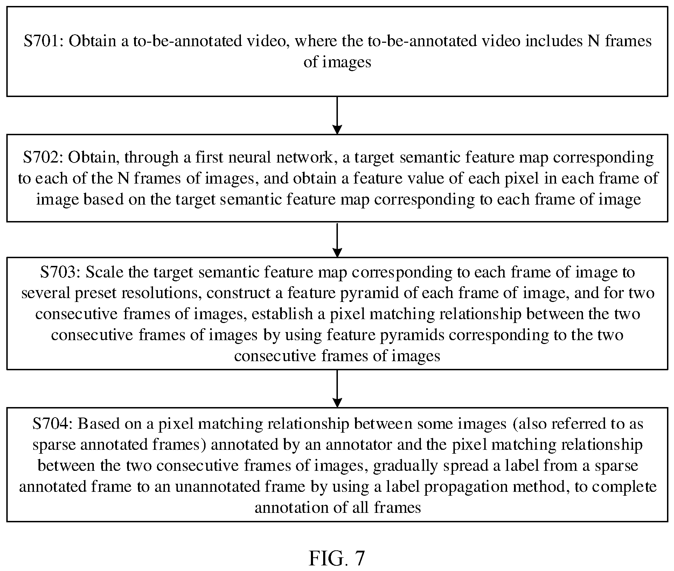

As shown in FIG. 7, the method for annotating each pixel in each frame of image in a video includes S701, S702, S703, and S704.

S701: Obtain a to-be-annotated video, where the to-be-annotated video includes N frames of images.

Specifically, the to-be-annotated video in this embodiment may be considered as a video including N frames of images. More specifically, in the N frames of images, each pixel in some images has been annotated by an annotator, and each pixel in the other images is to be annotated.

S702: Obtain, through the first neural network, a target semantic feature map corresponding to each of the N frames of images, and obtain a feature value of each pixel in each frame of image based on the target semantic feature map corresponding to each frame of image.

For descriptions of the first neural network, refer to the descriptions in the embodiment shown in FIG. 2. Details are not described herein again.

In a first implementation solution, for each of the N frames of images in step S701, the frame of image is used as an input image of the first neural network, and a feature map output by a feature extraction layer (which may be defined by a user) in the first neural network is obtained after the frame of image is input to the first neural network. Then, the feature map output by the feature extraction layer is scaled to a first resolution to obtain a target semantic feature map, where the first resolution is a resolution of the frame of image. It should be understood that a pixel value at a location in the target semantic feature map is a corresponding feature value of a pixel at the same location in the frame of image.

In a second implementation solution, for each of the N frames of images in step S701, the frame of image is used as an input image of the first neural network, and L feature maps output by L (L is greater than 1) feature extraction layers (which feature extraction layers can be the L feature extraction layers may be specifically defined by a user) in the first neural network are obtained after the frame of image is input to the first neural network. Then, the L feature maps are scaled to L feature maps of a first resolution, where the first resolution is a resolution of an input image. Finally, a feature map obtained after fusion processing is performed on the L feature maps of the first resolution is determined as the target semantic feature map.

It should be understood that feature maps output by different feature extraction layers may reflect different types of features of an image. Therefore, the feature value of each pixel determined by using the target feature map that is obtained based on the feature maps output by the L feature extraction layers in the first neural network is more accurate than the feature value of each pixel determined by using the target feature map that is obtained based on the feature map output by a separate feature extraction layer.

In this application, the first target feature map or the second target feature map is an image used to obtain a feature value of each pixel. Therefore, in this application, the first target feature map or the second target feature map is also referred to as a pixel-level semantic feature map.

More detailed description of obtaining, through the first neural network, the pixel-level semantic feature map corresponding to each frame of image may be similar to the descriptions of obtaining the feature value of each pixel in the first image through the first neural network in the embodiment shown in FIG. 2. Details are not described herein again.

S703: Scale the target semantic feature map corresponding to each frame of image to several preset resolutions, construct a feature pyramid of each frame of image, and for two consecutive frames of images, establish a pixel matching relationship between the two consecutive frames of images by using feature pyramids corresponding to the two consecutive frames of images.

Specifically, during implementation, the following steps are included.

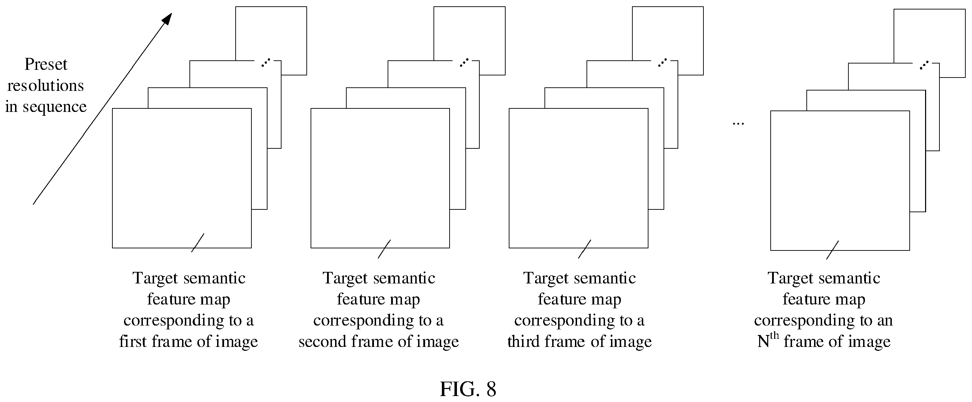

Step 1: As shown in FIG. 8, first sequentially scale down, in descending order, the target semantic feature map of each of the N frames of images obtained in step S702 to several resolutions preset by a user, and then form the feature pyramid of each frame of image together with the target semantic feature map obtained in step S702, where different layers of the feature pyramid correspond to different resolutions.

In this embodiment, an image obtained by scaling down the target semantic feature map to a resolution is referred to as a semantic feature map at the resolution.

Step 2: For two consecutive frames of images, obtain a semantic feature map of a lowest resolution in a feature pyramid corresponding to each of the two consecutive frames of images. A matching relationship between pixels in semantic feature maps that are of the lowest resolution and that correspond to the two consecutive frames of images is established by using a highest similarity between semantic feature values as a target.

Herein, the highest similarity between semantic feature values may be measured by using a shortest Euclidean distance between semantic features, a highest cos similarity between semantic feature values, a highest inner product similarity between semantic feature values, or the like. This does not constitute a limitation on this application.

Step 3: For the two consecutive frames of images, establish a matching relationship between pixels in the two consecutive frames of images based on the matching relationship between the pixels in the semantic feature maps that are of the lowest resolution and that correspond to the two consecutive frames of images and a scaling relationship.

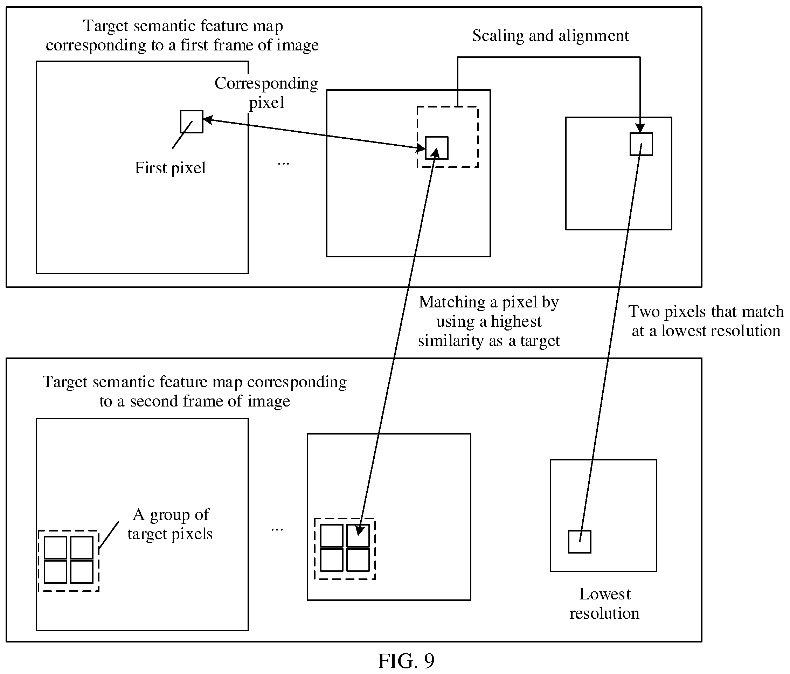

During specific implementation, for two consecutive frames of images, it is assumed that one frame of image is referred to as a first frame of image, and the other frame of image is referred to as a second frame of image. In this case, if a pixel that matches a first pixel (which may be any pixel in the first frame of image) in the first frame of image and that is in the second frame of image needs to be determined, as shown in FIG. 9, locations, in semantic feature maps of different resolutions, of first pixels in the first frame of image may be first determined based on the scaling relationship. Then, a pixel, matching the first pixel, in a semantic feature map that is of the lowest resolution and that corresponds to the second image is determined based on a matching relationship between matched pixels in the semantic feature maps that are of the lowest resolution and that correspond to the first frame of image and the second frame of image. Then, a group of pixels corresponding to the matched pixels in the semantic feature map that is of the lowest resolution and that corresponds to the second image is obtained, based on the scaling relationship, from an unmatched semantic feature map of the lowest resolution. Then, a similarity between a semantic feature value of a pixel, corresponding to the first pixel, in the unmatched semantic feature map of the lowest resolution and a feature value of each pixel in the group of pixels is calculated, to determine a pixel, matching the first pixel, in the unmatched semantic feature map of the lowest resolution. In this case, the lowest resolution for which matching is not performed becomes a resolution for which matching is performed. Finally, the foregoing process is repeated until the pixel, matching the first pixel, in a pixel-level semantic feature map (of a highest resolution) corresponding to the second image is determined.

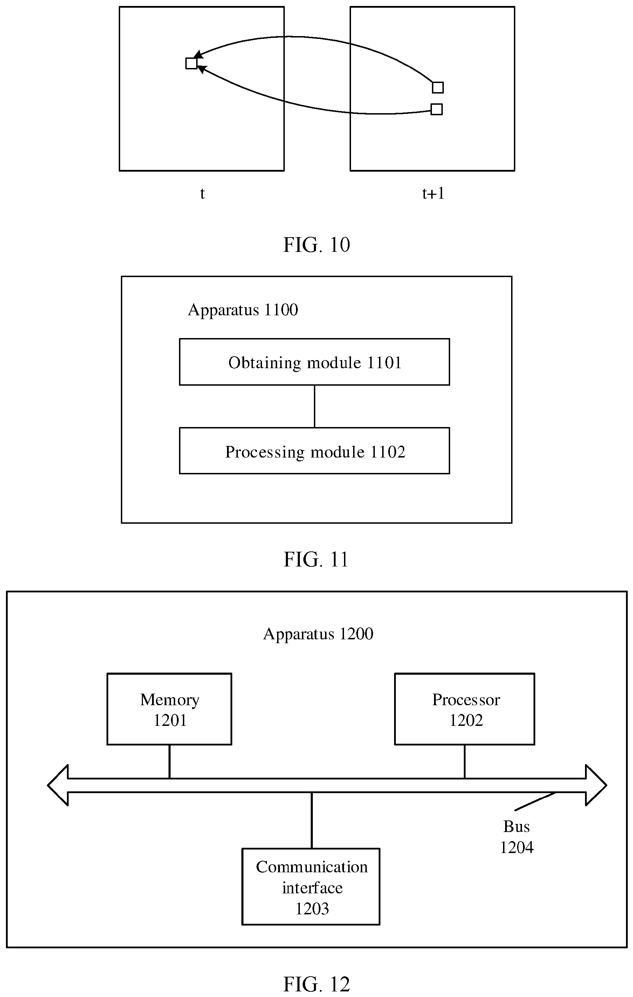

It should be understood that there may be a case in which different pixels in a same frame of image may be matched to a same pixel in another frame of image. For example, as shown in FIG. 10, t and t+1 represent two consecutive frames of images at a moment t and a moment t+1, arrows point to a matched pixel, and two different pixels in an image corresponding to the moment t+1 match a same pixel in an image corresponding to the moment t. However, according to the method provided in this embodiment, a one-to-one correspondence is not required between pixels in two consecutive frames, and a many-to-one matching relationship may also be established between a pixel that newly appears in a frame and an existing pixel in the other frame. Therefore, in a rapid change scenario in which a large quantity of newly added pixels exist and a complex occlusion change scenario, this application has stronger generalization performance and precision than a method such as an optical flow method.

S704: Based on a pixel matching relationship between some images (also referred to as sparse annotated frames) annotated by an annotator and the pixel matching relationship between the two consecutive frames of images, gradually spread a label from the sparse annotated frame to an unannotated frame by using a label propagation method, to complete annotation of all frames.

Specifically, during implementation, the following steps are included.

Step 1: For any unannotated frame, set the unannotated frame as a target frame. If two adjacent frames of the unannotated frame are not annotated, the target frame is not processed temporarily. If only one of the adjacent frames is annotated, it is assumed that the annotated frame is a reference frame. For any target pixel in the target frame, a matched pixel, in the reference frame, of the target pixel is found based on the matching relationship obtained in step S703, and an annotation of the matched pixel is used as an annotation of the target pixel. If both of the two adjacent frames of the target frame are annotated, for any target pixel in the target frame, an annotation of a pixel that is in matched pixels of the target pixel in the adjacent frames and that has a shorter distance from the target pixel is used as a target pixel annotation. If distances are the same, an annotation of any matched pixel is used as a target annotation.

Step 2: Repeat step 1 until all frames are annotated.

In this embodiment, an annotation of the annotator is propagated from one pixel to another pixel, and the annotation does not need to be consistent with an annotation used during training of a pre-trained deep learning model. Therefore, this application can cover more annotation tasks. In addition, label propagation based on a pixel semantic similarity achieves higher precision than pre-annotation directly performed by using the pre-trained deep learning model, or pre-annotation performed after the pre-trained deep learning model is fine-tuned by using a small quantity of annotated frames.

The foregoing describes in detail the annotation method in embodiments of this application with reference to FIG. 2 to FIG. 10. The following describes in detail an annotation apparatus according to embodiments of this application with reference to FIG. 11 and FIG. 12.

FIG. 11 is a diagram of a structure of the annotation apparatus according to an embodiment of this application. Specifically, as shown in FIG. 11, the annotation apparatus includes an obtaining module 1101 and a processing module 1102.

In a first embodiment, the obtaining module 1101 is configured to obtain a first feature value of a first pixel set in a first image through a first neural network, where the first neural network is used to obtain a feature value of a pixel in an image, and the first pixel set includes at least one pixel. The obtaining module 1101 is further configured to obtain a second feature value of a second pixel set in a second image through the first neural network, where the second pixel set includes at least one pixel. The processing module 1102 is configured to determine an annotation of the first pixel set based on an annotation of the second pixel set and a similarity between the first feature value and the second feature value.

In a possible implementation, the obtaining module 1101 is specifically configured to: obtain a feature map output by the first neural network at a first feature extraction layer after the first image is input to the first neural network. The processing module 1102 is specifically configured to: obtain a first target semantic feature map based on the feature map output by the first feature extraction layer; and determine the first feature value of the first pixel set based on the first target semantic feature map.

In a possible implementation, the obtaining module 1101 is further configured to: obtain a feature map output by the first neural network at a second feature extraction layer after the first image is input to the first neural network. The processing module 1102 is further configured to: obtain the first target semantic feature map based on the feature map output by the first feature extraction layer and the feature map output by the second feature extraction layer.

In a possible implementation, a resolution of the first target semantic feature map is consistent with a first resolution, and the first resolution is a resolution of the first image.

In a possible implementation, the obtaining module 1101 is further configured to: obtain, through the first neural network, a second target semantic feature map corresponding to the second image. The processing module 1102 is further configured to: scale down the first target semantic feature map to a third target semantic feature map of a second resolution, where the second resolution is less than the first resolution; scale down the second target semantic feature map to a fourth target semantic feature map of the second resolution; determine, based on the first resolution and the second resolution, a third pixel set that is in the third target semantic feature map and that corresponds to the first pixel set; determine, in the fourth target semantic feature map, a fourth pixel set that has a highest pixel value similarity to the third pixel set; determine, in the second image based on the first resolution and the second resolution, a group of second pixel sets corresponding to the fourth pixel set; and determine, as the annotation of the first pixel set, an annotation of a second pixel set that is in the group of second pixel sets and whose feature value has a highest similarity to the first feature value.

In a possible implementation, the similarity includes any one of the following measurement manners: a Euclidean distance between feature values, a cosine distance between feature values, and an inner product similarity between feature values.

FIG. 12 is a diagram of a structure of the annotation apparatus according to another embodiment of this application. The apparatus shown in FIG. 12 may be configured to perform the method in any one of the foregoing embodiments.

As shown in FIG. 12, the apparatus 1200 in this embodiment includes a memory 1201 and a processor 1202. Optionally, the apparatus 1200 further includes a communication interface 1203 and a bus 1204. The memory 1201, the processor 1202, and the communication interface 1203 implement mutual communication connections through the bus 1204.

The memory 1201 may be a read-only memory (read-only memory, ROM), a static storage device, a dynamic storage device, or a random access memory (random access memory, RAM). The memory 1201 may store a program. When the program stored in the memory 1201 is executed by the processor 1202, the processor 1202 is configured to perform the steps of the methods shown in FIG. 2 to FIG. 10.

The processor 1202 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 2 to FIG. 10 in this application.

The processor 1202 may alternatively be an integrated circuit chip and has a signal processing capability. In an implementation process, the steps of the methods in FIG. 2 to FIG. 10 in embodiments of this application may be completed by an integrated logic circuit of hardware in the processor 1202 or by using instructions in a form of software.

The processor 1202 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed through a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1201. The processor 1202 reads information in the memory 1201, and completes, in combination with hardware of the processor 1202, functions that need to be performed by a unit included in the apparatus in this application, for example, may perform the steps/functions in the embodiments shown in FIG. 2 to FIG. 10.

The communication interface 1203 may use, but is not limited to, a transceiver apparatus such as a transceiver, to implement communication between the apparatus 1200 and another device or a communication network.

The bus 1204 may include a path for transmitting information between components (for example, the memory 1201, the processor 1202, and the communication interface 1203) of the apparatus 1200.

It should be understood that the apparatus 1200 shown in this embodiment of this application may be an electronic device, or may be a chip configured in an electronic device. The apparatus 1200 may be deployed on a vehicle side, or may be deployed on a server side.

All or some of the foregoing embodiments may be implemented using software, hardware, firmware, or any combination thereof. When software is used to implement embodiments, the foregoing embodiments may be completely or partially implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An annotation method, comprising:
obtaining a first feature value of a first pixel set in a first image through a first neural network, wherein the first neural network is used to obtain a feature value of a pixel in an image, and the first pixel set comprises at least one pixel;
obtaining a second feature value of a second pixel set in a second image through the first neural network, wherein the second pixel set comprises at least one pixel; and
determining an annotation of the first pixel set based on an annotation of the second pixel set and a similarity between the first feature value and the second feature value.

2. The method according to claim 1, wherein the obtaining a first feature value of a first pixel set in a first image through a first neural network comprises:
obtaining a feature map output by the first neural network at a first feature extraction layer after the first image is input to the first neural network;
obtaining a first target semantic feature map based on the feature map output by the first feature extraction layer; and
determining the first feature value of the first pixel set based on the first target semantic feature map.

3. The method according to claim 2, wherein the method further comprises:
obtaining a feature map output by the first neural network at a second feature extraction layer after the first image is input to the first neural network; and
the obtaining a first target semantic feature map based on the feature map output by the first feature extraction layer comprises:
obtaining the first target semantic feature map based on the feature map output by the first feature extraction layer and the feature map output by the second feature extraction layer.

4. The method according to claim 2 or 3, wherein a resolution of the first target semantic feature map is consistent with a first resolution, and the first resolution is a resolution of the first image.

5. The method according to claim 4, wherein the method further comprises:
obtaining, through the first neural network, a second target semantic feature map corresponding to the second image;
scaling down the first target semantic feature map to a third target semantic feature map of a second resolution, wherein the second resolution is less than the first resolution;
scaling down the second target semantic feature map to a fourth target semantic feature map of the second resolution;
determining, based on the first resolution and the second resolution, a third pixel set that is in the third target semantic feature map and that corresponds to the first pixel set;
determining, in the fourth target semantic feature map, a fourth pixel set that has a highest pixel value similarity to the third pixel set; and
determining, in the second image based on the first resolution and the second resolution, a group of second pixel sets corresponding to the fourth pixel set; and
the determining an annotation of the first pixel set based on an annotation of the second pixel set and a similarity between the first feature value and the second feature value comprises:
determining, as the annotation of the first pixel set, an annotation of a second pixel set that is in the group of second pixel sets and whose feature value has a highest similarity to the first feature value.

6. The method according to any one of claims 1 to 5, wherein the similarity comprises any one of the following measurement manners: a Euclidean distance between feature values, a cosine distance between feature values, and an inner product similarity between feature values.

7. An annotation apparatus, comprising:
an obtaining module, configured to obtain a first feature value of a first pixel set in a first image through a first neural network, wherein the first neural network is used to obtain a feature value of a pixel in an image, and the first pixel set comprises at least one pixel, wherein
the obtaining module is further configured to obtain a second feature value of a second pixel set in a second image through the first neural network, wherein the second pixel set comprises at least one pixel; and
a processing module, configured to determine an annotation of the first pixel set based on an annotation of the second pixel set and a similarity between the first feature value and the second feature value.

8. The apparatus according to claim 7, wherein the obtaining module is specifically configured to:
obtain a feature map output by the first neural network at a first feature extraction layer after the first image is input to the first neural network; and
the processing module is specifically configured to:
obtain a first target semantic feature map based on the feature map output by the first feature extraction layer; and
determine the first feature value of the first pixel set based on the first target semantic feature map.

9. The apparatus according to claim 8, wherein the obtaining module is further configured to:
obtain a feature map output by the first neural network at a second feature extraction layer after the first image is input to the first neural network; and
the processing module is further configured to:
obtain the first target semantic feature map based on the feature map output by the first feature extraction layer and the feature map output by the second feature extraction layer.

10. The apparatus according to claim 8 or 9, wherein a resolution of the first target semantic feature map is consistent with a first resolution, and the first resolution is a resolution of the first image.

11. The apparatus according to claim 10, wherein the obtaining module is further configured to:
obtain, through the first neural network, a second target semantic feature map corresponding to the second image; and
the processing module is further configured to:
scale down the first target semantic feature map to a third target semantic feature map of a second resolution, wherein the second resolution is less than the first resolution;
scale down the second target semantic feature map to a fourth target semantic feature map of the second resolution;
determine, based on the first resolution and the second resolution, a third pixel set that is in the third target semantic feature map and that corresponds to the first pixel set;
determine, in the fourth target semantic feature map, a fourth pixel set that has a highest pixel value similarity to the third pixel set;
determine, in the second image based on the first resolution and the second resolution, a group of second pixel sets corresponding to the fourth pixel set; and
determine, as the annotation of the first pixel set, an annotation of a second pixel set that is in the group of second pixel sets and whose feature value has a highest similarity to the first feature value.

12. The apparatus according to any one of claims 7 to 11, wherein the similarity comprises any one of the following measurement manners: a Euclidean distance between feature values, a cosine distance between feature values, and an inner product similarity between feature values.

13. An annotation apparatus of training data in a semantic segmentation neural network, comprising a memory and a processor, wherein
the memory is configured to store program instructions; and
the processor is configured to invoke the program instructions in the memory to perform the image processing method according to any one of claims 1 to 6.

14. A chip, wherein the chip comprises at least one processor and a communication interface, wherein the communication interface and the at least one processor are interconnected through a line, and the at least one processor is configured to run a computer program or instructions, to perform the method according to any one of claims 1 to 6.

15. A computer-readable medium, wherein the computer-readable medium stores program code to be executed by a computer, and the program code comprises instructions used to perform the method according to any one of claims 1 to 6.

16. A computer program product, wherein the computer program product comprises computer program code, and when the computer program code is run on a computer, the computer is enabled to implement the method according to any one of claims 1 to 6.
